(19) Europäisches Patentamt / European Patent Office / Office européen des brevets

(11) **EP 2 653 338 A2**

(12) **EUROPEAN PATENT APPLICATION**

(43) Date of publication:
**23.10.2013 Bulletin 2013/43**

(51) Int Cl.:
**B60L 11/18** *(2006.01)*

(21) Application number: **13158593.7**

(22) Date of filing: **11.03.2013**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(30) Priority: **17.04.2012 JP 2012093677**<br><br>(71) Applicant: **Sony Corporation**<br>**Tokyo 108-0075 (JP)** | (72) Inventors:<br>• **Honjo, Ryoki**<br>**Minato-ku, Tokyo 108-0075 (JP)**<br>• **Haraguchi, Tomoharu**<br>**Fujisawa-shi, Kanagawa (JP)**<br><br>(74) Representative: **Lewis, Darren John**<br>**D Young & Co LLP**<br>**120 Holborn**<br>**London EC1N 2DY (GB)** |

(54) **Charging device, control method of charging device, electric-powered vehicle, energy storage device and power system**

(57) Disclosed herein is a charging device including: a power supply section adapted to supply power from a power source to external equipment; a control section adapted to activate the power supply section; and an activation section adapted to activate the power supply section if the control section is not activated.

FIG. 3

START

ANY INPUT TO ACTIVATION SECTION ? — S11
NO →
YES ↓

ENABLE SIGNAL OUTPUT FROM ACTIVATION SECTION — S12

ENABLE SIGNAL OUTPUT BASED ON LOGIC OPERATION ? — S13
NO →
YES ↓

FIRST INSULATING DD, CHARGER AND THIRD INSULATING DD ACTIVATED — S14

POWER SUPPLIED TO CONTROL MICROCOMPUTER AND OTHER SECTIONS — S15

CONTROL MICROCOMPUTER ACTIVATED — S16

CONTROL MICROCOMPUTER CONTROLS CHARGER — S17

HAS BATTERY CHARGE REACHED GIVEN LEVEL ? — S18
NO ←
YES ↓

POWER SUPPLY SETUP PROCESS — S19

END

EP 2 653 338 A2

## Description

The present technology relates to a charging device, control method of the same, electric-powered vehicle, energy storage device and power system.

In a power controller as disclosed in Japanese Patent Laid-Open No. 2006-246559 which is used, for example, as a UPS (Uninterruptible Power Supply) and includes a battery, a charging device such as a charger adapted to charge the battery with power from an external source, and a control section such as a control microcomputer, the charging device commonly remains powered on at all times. This allows the power controller to operate on power from an external power source even if the battery charge is low.

However, recent years have seen a wide range of use cases handled by a power controller that is used, for example, as a UPS, and it has become necessary to flexibly control, for example, the on/off status of, and the amount of power supplied to, the charging device under control of the control section.

When the control section is powered from the installed battery, but if the battery is low or almost drained, the control section is not supplied with power. In this case, the control section is not activated, making it difficult for the same section to control the charging device to turn on or off. As a result, the charging device is not activated.

In light of the foregoing, it is desirable to provide a charging device which can be activated to supply power even if a control section adapted to activate the charging device is not activated, a control method of the charging device, electric-powered vehicle, energy storage device and power system using the same.

Various respective aspects and features of the invention are defined in the appended claims. Combinations of features from the dependent claims may be combined with features of the independent claims as appropriate and not merely as explicitly set out in the claims.

According to a first mode of the present technology, there is provided a charging device that includes a power supply section and activation section. The power supply section supplies power from a power source to external equipment. The activation section activates the power supply section if a control section adapted to activate the power supply section is not activated.

According to a second mode of the present technology, there is provided a control method of a charging device for activating a power supply section adapted to supply power from a power source to external equipment if a control section adapted to activate the power supply section is not activated.

According to a third mode of the present technology, there is provided an electric-powered vehicle that includes a charging device, a converter and a controller. The charging device includes a power supply section and an activation section. The power supply section supplies power from a power source to external equipment. The activation section activates the power supply section if a control section adapted to activate the power supply section is not activated. The converter is supplied with power from the power supply section and converts power into a driving force of the vehicle. The controller handles information processing relating to vehicle control based on information about the power supply section.

According to a fourth mode of the present technology, there is provided an energy storage device that includes a charging device and supplies power to electronic equipment connected to a power supply section. The charging device includes a power supply section and an activation section. The power supply section supplies power from a power source to external equipment. The activation section activates the power supply section if the control section adapted to activate the power supply section is not activated.

According to a fifth mode of the present technology, there is provided a power system that includes a charging device. The charging device includes a power supply section and an activation section. The power supply section supplies power from a power source to external equipment. The activation section activates the power supply section if a control section adapted to activate the power supply section is not activated. In the power system, the battery supplies power, and is supplied with power from a generator or an electricity network.

The present technology ensures activation of the charging device even if the control section adapted to activate the charging device is not activated, thus permitting supply of power.

Embodiments of the invention will now be described with reference to the accompanying drawings, throughout which like parts are referred to by like references, and in which:

FIG. 1 is a block diagram illustrating the configuration of a charging device according to the present technology;
FIG. 2 is a block diagram illustrating the configuration of a power controller having the charging device;
FIG. 3 is a flowchart illustrating the process flow of the power controller having the charging device;
FIG. 4 is a diagram illustrating an example of applying an energy storage device, to which the present technology is applied, to a home energy storage system; and
FIG. 5 is a diagram illustrating the configuration of a hybrid vehicle adopting a hybrid system to which the present technology is applied.

A description will be given below of the preferred embodiment of the present technology with reference to the accompanying drawings. It should be noted, however, that the present technology is not limited to the execution examples given below. It should be noted that the description will be given in the following order.

<1. Embodiment>

2

[1-1. Configuration of the Charging Device and Power Controller]
[1-2. Processes Performed by the Charging Device and Power Controller]

<2. Modification Example>

<1. Embodiment>

[1-1. Configuration of the Charging Device and Power Controller]

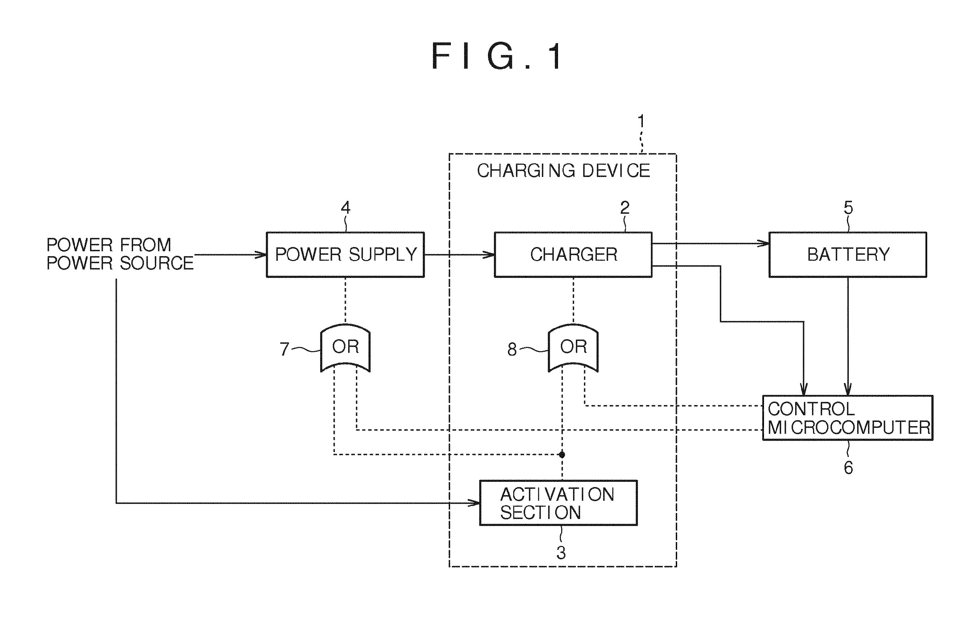

FIG. 1 is a block diagram illustrating the configuration of a charging device 1 according to the present technology. The charging device 1 includes a charger 2 and an activation section 3. In FIG. 1, a power supply 4, a battery 5, a control microcomputer 6 and first and second OR circuits 7 and 8 are connected to the charging device 1. It should be noted that the solid lines in FIG. 1 represent the power transmission lines for transmission of power. On the other hand, the dashed lines represent the control lines for transmission of control signals.

The power supply 4 is a voltage conversion circuit such as DD (Digital- Digital) converter. The power supply 4 corresponds to a voltage conversion section as defined in the appended claims. The power supply 4 is connected to an external power source, thus allowing power to be supplied to the power supply 4 from the external power source. Further, the power supply 4 is connected to the charger 2, converting the voltage of the power from the external power source to a given voltage level and supplying the power to the charger 2.

A power grid and natural energy power generating system are among external power sources. The term "power grid" refers to a system owned by a utility company and integrating power generation, transformation, transmission and distribution to supply power to its consumers.

The term "natural energy power generating system" refers to a power generation facility using a low environmental load energy such as so-called natural energy or renewable energy. For example, power generation systems using solar light, solar heat, wind power, hydraulic power, micro hydraulic power, tidal power, wave power, water temperature difference, ocean current, biomass, geothermal energy and energies such as sound and vibration are among natural energy power generating systems. Further, a natural energy power generating system may generate power by human power such as exercise bike with power generating function and floor (referred, for example, to as a power generating floor) having an arrangement adapted to generate power by people walking on the floor. It should be noted, however, that a natural energy power generating system is not limited to the power generation facilities listed above but may be any system so long as it adopts a power generation method with a low environmental load.

The charger 2 is connected to the power supply 4 and the battery 5 and supplied with power from the power supply 4. Then, the charger 2 converts DC (direct current) power into AC (alternating current) power, supplying power from the power supply 4 to the battery 5. The charger 2 is, for example, a constant current battery charger that includes a CC (Constant Voltage) circuit or a constant current/constant voltage battery charger that includes a CCCV (Constant Current, Constant Voltage) circuit. The charger 2 charges the battery 5, for example, through constant current charge or constant current/constant voltage charge.

The charger 2 is activated and operates under control of the control microcomputer 6. Further, the charger 2 is also activated in response to an enable signal supplied from the activation section 3 even when not under control of the control microcomputer 6, thus allowing power to be supplied. The charger corresponds to a power supply section as defined in the appended claims.

The battery 5 includes, for example, battery cells adapted to store power and a cell control section adapted to manage and control the battery cells. Any type of cells that can charge and discharge such as lithium-ion secondary cells, lithium-ion-polymer secondary cells or nickel-hydrogen cells may be used as the battery cells.

The cell control section includes, for example, a CPU (Central Processing Unit), RAM (Random Access Memory), ROM (Read Only Memory) and sensors adapted to manage the battery cell statuses (e.g., temperature and charge). Further, the cell control section supplies, in response to a request from the control microcomputer 6, information necessary to control the battery 5 such as charge level, cell temperature and cell voltage.

The control microcomputer 6 includes, for example, a microcomputer. It should be noted that a controller including a CPU, a RAM and a ROM may be used instead of the control microcomputer 6. The control microcomputer 6 executes a given program, thus controlling the charging device 1 and various sections connected to the charging device 1.

The control microcomputer 6 is connected to the power supply 4 via a first OR circuit 7. The same microcomputer 6 supplies an enable signal adapted to activate the power supply 4. Further, the control microcomputer 6 is connected to the charger 2 via a second OR circuit 8. The same microcomputer 6 supplies an enable signal adapted to activate the charger 2.

The activation section 3 activates the power supply 4 and the charger 2 by transmitting an enable signal to the power supply 4 and the charger 2. A switch that accepts user input can be used, for example, as the activation section 3. The same section 3 is connected to the power supply 4 via the first OR circuit 7. Further, the activation section 3 is connected to the charger 2 via the second OR circuit 8. Still further, the activation section 3 is connected to an external power source and operates on power supplied from the external power source. It should be noted, however, that when the activation section 3 is a switch, and when the enable signal is an open drain signal, no power source is necessary for the activation section 3. An open drain signal is a wired-OR signal, and simply connecting this signal allows OR logic operation.

When supplied with an enable signal from the control microcomputer 6 or the activation section 3, the first OR circuit 7 supplies this enable signal to the power supply 4. Further, when supplied with an enable signal from the control microcomputer 6 or the activation section 3, the second OR circuit 8 supplies this enable signal to the charger 2.

A button or touch panel that accepts user input can be used, for example, as the activation section 3. The activation section 3 supplies an enable signal adapted to turn on the power for the charger 2 to the power supply 4 and the charger 2 in response to a user input.

When the user makes an input, the activation section 3 outputs an enable signal for a given period of time. This enable signal is supplied to the power supply 4 via the first OR circuit 7 and to the charger 2 via the second OR circuit 8. Alternatively, the activation section 3 may output the enable signal while the user makes an input (e.g., while a button is held pressed if the activation section 3 has the button). In this case, the enable signal output stops when the user stops making an input into the activation section 3.

It is only necessary for the user to make an input into the activation section 3 only for a small amount of time until the power supply 4 and the charger 2 are activated, the control microcomputer 6 is activated as a result of supply of power thereto and the same microcomputer 6 begins to control the power supply 4 and the charger 2. The control microcomputer 6 exercises control in such a manner that power from the charger 2 is supplied to the same microcomputer 6. Once the control microcomputer 6 begins to control the charger 2, the charger 2 continues to operate even if the enable signal from the activation section 3 stops.

Assume that the control microcomputer 6 to control the whole of the charging device 1 will not be turned on because of the deficient remaining charge of the battery 5, even if the user turns the charging device 1 on. In this case, the user can make an input into the activation section 3. When the user makes an input into the activation section 3, an enable signal is supplied to the charger 2, whereby the power supply 4 and the charger 2 are activated without control by the control microcomputer 6.

An input into the activation section 3 may be made, for example, together with the operation of a switch (not shown) adapted to power on the charging device 1. It should be noted, however, that the method of turning on the activation section 3 is not limited thereto. Alternatively, only the activation section 3 may be turned on.

The control microcomputer 6 and the activation section 3 are both connected to the power supply 4 via the first OR circuit 7. Further, the control microcomputer 6 and the activation section 3 are both connected to the charger 2 via the second OR circuit 8. Therefore, the power supply 4 and the charger 2 are activated when an enable signal is supplied from the control microcomputer 6 or the activation section 3.

It should be noted that fail safe control is implemented in software and hardware in the charging device 1. In the event of an anomaly in the charging device 1 when the control microcomputer 6 is active and controls the charger in a normal manner, the control microcomputer 6 detects the anomaly, supplying a fail safe control signal to the power supply 4. This disables the power supply 4, thus ensuring safety by keeping the power supply 4 disabled.

In the event of detection of an anomaly by the charger 2 when the control microcomputer 6 is inactive and the charger 2 is active in response to an enable signal from the activation section 3, on the other hand, the charger 2 and the power supply 4 are disabled and maintained in this state.

The charging device 1 is configured as described above. It should be noted that the charging device 1 may be connected to external electric equipment to supply power to that equipment. Among pieces of external electric equipment to be connected to the charging device 1 are television receiver, electronic equipment such as audio devices, refrigerator, microwave oven, washing machine, air-conditioner, personal computer, copying machine, facsimile machine and printer. It should be noted that external equipment is not limited thereto and any equipment may be connected so long as it operates on electric power.

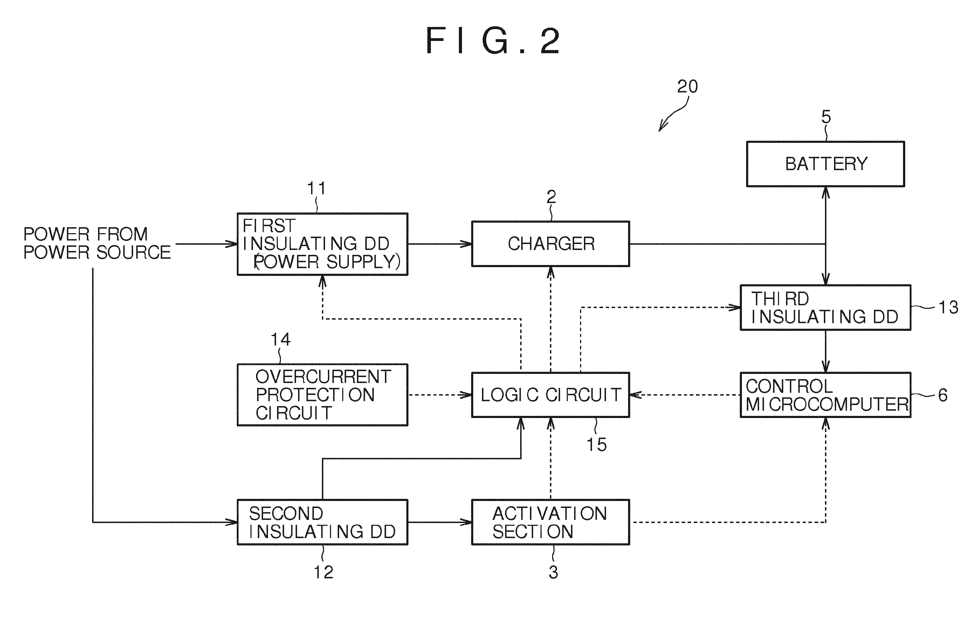

FIG. 2 is a block diagram illustrating the configuration of a power controller 20 having the charging device 1 described above. The power controller 20 includes a first insulating DD 11 (DD converter), a second insulating DD 12, the charger 2, a third insulating DD 13, the control microcomputer 6, the battery 5, the activation section 3, an overcurrent protection circuit 14 and a logic circuit 15.

The first insulating DD 11 is a DD converter. The same DD11 is connected to an external power source and supplied with power from the external power source. The first insulating DD 11 is connected to the charger 2, converting the voltage of the power from the external power source to a given voltage level and supplying the power to the charger 2. The first insulating DD 11 corresponds to the power supply 4 in FIG. 1.

The second insulating DD 12 is a DD converter connected to the external power source and supplied with power from the external power source. The second insulating DD 12 is connected to the activation section 3, converting the voltage of the power from the external power source to a given voltage level (e.g., if 100 VAC power is supplied from the external power source, this power is converted to 60 VDC) and supplying the power to the activation section 3. Further, the second insulating DD 12 is connected to the logic circuit 15, supplying power to the same circuit 15.

The charger 2 is, for example, a constant current/constant voltage charger and performs DC-DC conversion, supplying power from the first insulating DD 11 to the battery 5. The charger 2 charges the battery 5, for example, through constant current charge or constant current/constant voltage charge.

Further, the charger 2 supplies power to the third insulating DD 13. The same DD 13 converts the power to a given voltage level (e.g., if 60 VAC power is supplied from the charger 2, this power is converted to 5 VDC), supplying the power to the control microcomputer 6.

The control microcomputer 6 includes, for example, a microcomputer and executes a given program, thus controlling the charging device 1 and various sections connected to the charging device 1. It should be noted that a controller including a CPU, RAM and ROM may be used rather than the control microcomputer 6.

The battery 5 includes, for example, battery cells adapted to store power and a cell control section adapted to manage and control the battery cells. The battery 5 can supply power, for example, to external electronic equipment connected to the control microcomputer 6 and/or the power controller 20 under control of the same microcomputer 6. It should be noted that power may be supplied to the control microcomputer 6 directly from the charger 2 via the third insulating DD 13. Alternatively, power may be supplied from the charger 2 to the battery 5, thus supplying power stored in the battery 5 to the control microcomputer 6 via the third insulating DD 13.

The activation section 3 supplies an enable signal adapted to turn on the power for the first insulating DD 11 and the charger 2 in response to user input as described above. Alternatively, the same section 3 may automatically supply an enable signal for a given period of time if it detects the supply of power from the external power source via the second insulating DD 12. The charging device includes the charger 2 and the activation section 3.

The overcurrent protection circuit 14 includes, for example, an IC (Integrated Circuit). The same circuit 14 restricts the output current of the power controller 20 in such a manner that no more power than necessary is output from the same controller 20 to external destinations. The overcurrent protection circuit 14 is connected to the logic circuit 15, outputting a given control signal for overcurrent protection. If a control signal is output from the same circuit 14 for overcurrent protection, the first insulating DD 11 and the charger 2 are not activated, thus preventing power from being supplied to external equipment.

The logic circuit 15 includes, for example, an IC to perform logic operations. The activation section 3, the control microcomputer 6 and the overcurrent protection circuit 14 are connected to the logic circuit 15. Further, the same circuit 15 is connected to the first insulating DD 11 and the charger 2.

The logic circuit 15 performs a logic operation in accordance with Formula 1 shown below. It should be noted that, in Formula 1, the supply of an enable signal from the control microcomputer 6 is denoted by "A," the supply of an enable signal from the activation section 3 by "B," and the fact that the overcurrent protection circuit 14 is active by "C."

$$[\text{Formula 1}]$$
$$(\text{A}//\text{B})\,\&\&\,!\,\text{C}$$

That is, if an enable signal is supplied to the logic circuit 15 from the control microcomputer 6 or the activation section 3 while the overcurrent protection circuit 14 is inactive, the logic circuit 15 supplies the enable signal to the first insulating DD 11, the charger 2 and the third insulating DD 13. It can be said that the same circuit 15 serves the functions of the first and second OR circuits 7 and 8 shown in FIG. 1. On the other hand, if the overcurrent protection circuit 14 is active, an enable signal is not supplied to the first insulating DD 11, the charger 2 or the third insulating DD 13. As described above, the first insulating DD 11, the charger 2 and the third insulating DD 13 are activated by an enable signal from the control microcomputer 6 or the activation section 3. It should be noted that when the enable signal from the activation section 3 is an open drain signal, the open drain signal is a wired-OR signal, and, as a result, simply connecting this signal allows OR logic operation.

The power controller 20 having the functionality of a charging device is configured as described above.

[1-2. Processes Performed by the Charging Device and Power Controller]

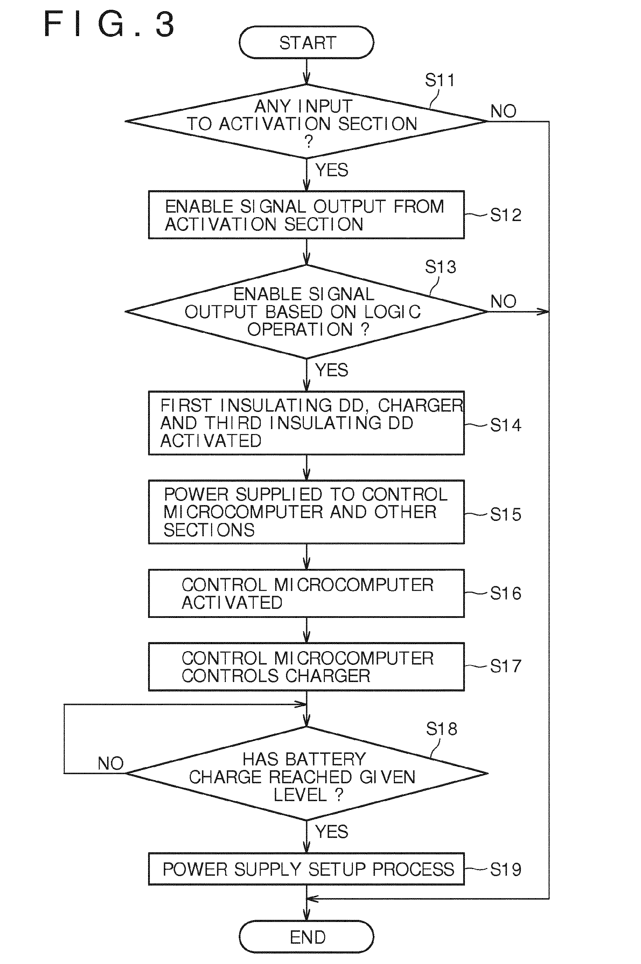

A description will be given next of the processes performed by the power controller having the functionality of a charging device and its operation. FIG. 3 is a flowchart illustrating the process and operation flow. It should be noted that the processes and operation shown in FIG. 3 are premised on the assumption that because the battery 5 is completely drained or very low, power is not supplied from the battery 5 to the control microcomputer 6, and therefore, the same microcomputer 6 is not activated.

At normal times, the power controller 20 is activated by and operates on power stored in the battery 5, supplying power from the battery 5 to the control microcomputer 6. This makes it possible for the same microcomputer 6 to operate, allowing the charger 2 to be activated and controlled. Further, the power controller 20 supplies power from the battery 5 not only to each of the sections making up the same controller 20 but also to external equipment.

However, if no power or a very limited amount of power is stored in the battery 5, it is difficult to supply power from the battery 5 to the control microcomputer 6.

As a result, the same microcomputer 6 does not operate, making it difficult to activate or operate the charger 2 adapted to operate under control of the control microcomputer 6. As a consequence, it is difficult to charge the battery 5 using power from the power source, thus making it difficult to operate the power controller 20.

Therefore, if the user finds that the battery 5 of the power controller 20 is low (e.g., when the power controller 20 is not activated even if it is powered on or when the user visually finds that the charge level of the battery 5 is low), he or she manually turns on the activation section 3. This turns on the first insulating DD 11 and the charger 2, making it possible to charge the battery 5 with power from the power source and further supply power to the control microcomputer 6.

First, in step S11, it is determined whether or not the user has made an input into the activation section 3. If no input has been made, no process is performed (NO in step S11). On the other hand, when the user has made an input into the activation section 3, the process proceeds to step S12 (YES in step S11).

When the user has made an input into the activation section 3, the same section 3 outputs an enable signal adapted to activate the first insulating DD 11 and the charger 2 in step S12.

Next, in step S13, the logic circuit 15 performs the logic operation described above based on Formula 1. The same circuit 15 supplies an enable signal to the first insulating DD 11 and the charger 2 if the same signal has been supplied from the control microcomputer 6 or the activation section 3 and if no control signal has been issued from the overcurrent protection circuit 14 for overcurrent protection (YES in step S13).

On the other hand, even if an enable signal has been supplied from the control microcomputer 6 or the activation section 3 but if overcurrent protection is enabled by the overcurrent protection circuit 14, the enable signal is not supplied to the power supply 4 or the charger 2 (NO in step S13). It should be noted that if no enable signal has been supplied from the control microcomputer 6 or the activation section 3, the enable signal is naturally not supplied from the logic circuit 15 to the first insulating DD 11 or the charger 2 (NO in step S13).

When the logic circuit 15 has supplied an enable signal to the first insulating DD 11, the charger 2 and the third insulating DD 13, these components are activated in response to the enable signal in next step S14. Then, in step S15, power is supplied from the external power source to the control microcomputer 6 via the first insulating DD 11, the charger 2 and the third insulating DD 13. This activates the same microcomputer 6 in next step S16. It should be noted that, in step S15, power is supplied from the external power source not only to the control microcomputer 6 but also to the battery 5 via the first insulating DD 11 and the charger 2.

Next, in step S17, the control microcomputer 6 activated transmits a given control signal to the charger 2, thus starting to control the charger 2. From this step onward, the charger 2 operates under control of the control microcomputer 6. The operation of the charger 2 under control of the control microcomputer 6 allows the charger 2 to continue to operate even if the enable signal from the activation section 3 stops. Then, power continues to be supplied from the external power source to the control microcomputer 6 and the battery 5 via the first insulating DD 11 and the charger 2.

It should be noted that it suffices to supply an enable signal until the control microcomputer 6 begins to control the first insulating DD 11 and the charger 2 after being activated. The reason for this is that, an enable signal from the activation section 3 becomes unnecessary because, after the activation of the same microcomputer 6, the charger 2 operates under control of the first insulating DD 11 and the control microcomputer 6.

Next, in step S18, the control microcomputer 6 acquires the charge level of the battery 5 and determines whether or not the charge level thereof has reached a given level. The charge level can be acquired by acquiring the remaining charge measured by the cell control section available with the battery 5. Alternatively, the charge level may be acquired by referencing the reading of the voltmeter or ammeter provided on the battery 5. It should be noted that the term "given level" refers, for example, to full charge.

If the control microcomputer 6 does not determine that the charge of the battery 5 has reached the given level, that is, if the charge of the battery 5 has yet to reach the given level, the battery 5 is charged until the charge thereof reaches the given level (NO in step S18).

On the other hand, when the control microcomputer 6 determines in step S18 that the charge level of the battery 5 has reached the given level, the process proceeds to step S19 (YES in step S18).

Then, in step S19, the control microcomputer 6 performs a power supply setup process. The term "power supply setup process" refers to specifying from which of the charger 2 and the battery 5 power is to be supplied to external equipment.

For example, after the battery 5 is charged to the given level, the control microcomputer 6 stops the charger 2 and exercises control in such a manner that power is supplied from the battery 5 to the control microcomputer 6, each section of the power controller 20 and external equipment. This makes it possible for the power controller 20 to operate on power of the battery 5 installed therein and further supply power to external equipment even in the event of interruption of supply of power from the external power source.

Alternatively, if a large amount of power is supplied to external equipment, the charger 2 may be left active so as to supply power from the external power source to external equipment. This makes it possible to supply power in a stable manner even if a large amount of power is supplied to external equipment.

As described above, even if the battery 5 is low or almost drained, and if the charging device 1 is not activated under control of the control microcomputer 6 because the same microcomputer 6 is not activated, the present embodiment allows activation and operation of the charging device 1. This makes it possible to supply power from the charger 2 to the control microcomputer 6. Further, the control microcomputer 6 can be activated and operated without leaving the charger 2 powered on at all times.

An uninterruptible power supply (UPS) is among use cases of the power controller 20 having a charging device according to the present technology. The battery is charged by power from an external power source such as grid power. Power from the battery is supplied to the control microcomputer and external equipment. This makes it possible to continue to supply power to the control microcomputer and external equipment even in the event of interruption of supply of power from the external power source due, for example, to blackout.

The present technology is also applicable to grid connection. The term "grid connection" refers, for example, to connecting the output of a natural energy generator such as solar or wind power generator to a commercial power grid provided, for example, by a utility company for coordinated operation. For example, power from the commercial power grid is stored in the battery at night time during which electricity rates are lower, and power from the battery is used at day time.

Further, the present technology is applicable to even out the amount of power supplied if the external power source is a natural energy power generating device. Natural energy power generation generates electricity, for example, from sunlight or wind and has a drawback in that the amount of generated power varies significantly depending on weather conditions. For this reason, the charging device according to the present technology is used to store power generated by the natural energy power generating device so as to supply power to the control microcomputer and external equipment from the battery, thus evening out the amount of power supplied.

<2. Modification Example>

While the embodiment of the present technology has been specifically described above, the present technology is not limited to the above embodiment but may be modified in various ways based on the technical concept of the present technology.

While the above embodiment has been descried as including an overcurrent protection circuit, the same circuit is not typically necessary. The present technology is effective even without any overcurrent protection circuit.

A description will be given next of equipment such as an electric-powered vehicle and an energy storage device to which the power controller according to the present technology is applied.

Among electric-powered vehicles are a railway vehicle, a golf cart, an electric-powered cart and an electric car (including a hybrid car).

Among energy storage devices are power sources for power storage designed not only for buildings such as houses but also for power generating facilities.

A description will be given below of a specific example of an energy storage system using an energy storage device to which the power controller 20 having the functionality of the charging device according to the present technology is applied.

This energy storage system is configured, for example, as described below. In a first energy storage system, an energy storage device is charged by a power generating device adapted to generate power from a reusable energy. A second energy storage system has an energy storage device to supply power to electronic equipment connected to the energy storage device. A third energy storage system is electronic equipment supplied with power from the energy storage device. These energy storage systems are implemented to achieve efficient supply of power in coordination with an external electricity supply network.

Further, a fourth energy storage system is an electric- powered vehicle having a converter and controller. The converter converts power, supplied from an energy storage device, to driving force of a vehicle. The controller processes information relating to vehicle control based on information relating to the energy storage device. A fifth energy storage system is a power system including a power information exchange section to control charge and discharge of the energy storage device based on information received by the exchange section. The power information exchange section exchanges signals with other equipment via a network. A sixth energy storage system is supplied with power from the energy storage device and supplies power from a power generating device or electricity network to the energy storage device. Hereinafter, the energy storage system will be described in detail.

(3-1) Home energy storage system as an Application Example

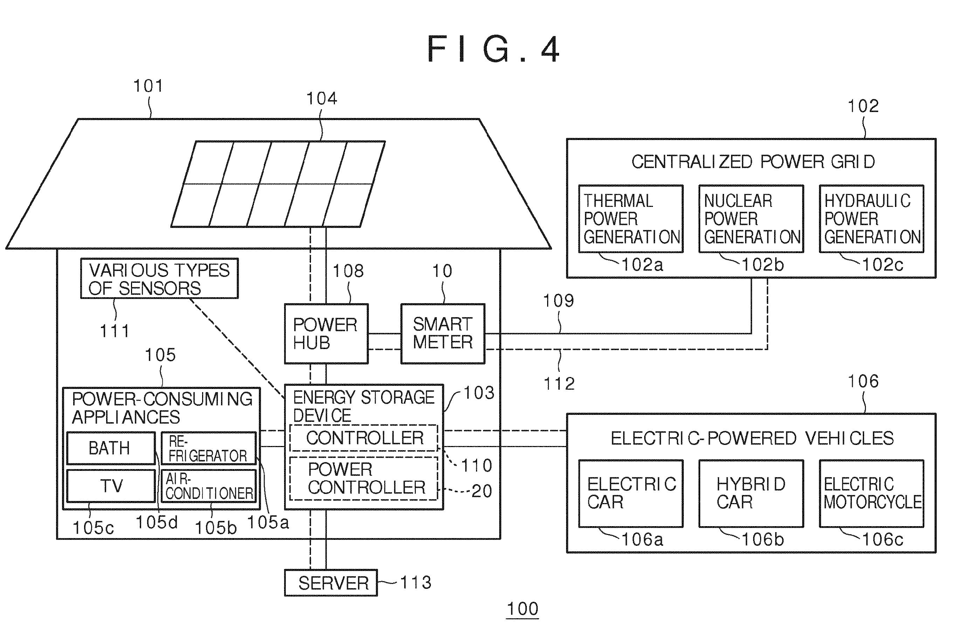

A description will be given next of an example of application of the energy storage device using the power controller according to the present technology to a home energy storage system with reference to FIG. 4. An energy storage device 103 includes a battery and further has the functionality of the power controller 20.

In an energy storage system 100 for a house 101, for example, power is supplied to the energy storage device 103 from a centralized power grid 102 such as a thermal power generation 102a, a nuclear power generation 102b and a hydraulic power generation 102c, for example, via an electricity network 109, an information network 112 and a power hub 108. At the same time, power is supplied to the energy storage device 103 from an independent power source such as a home power generating device 104. Power supplied to the energy storage device 103 is stored. The energy storage device 103 is used to supply power for use in the house 101. The same system is applicable not only to the house 101 but also to a building.

The home power generating device 104, power-consuming appliances 105, the energy storage device 103, a controller 110 adapted to control various devices and sensors 111 adapted to acquire various information are provided in the house 101. The power controller 20 is connected to the energy storage device 103. The home power generating device 104, power-consuming appliances 105, the energy storage device 103 and the controller 110 are connected together by the electricity network 109 and the information network 112. A solar cell or a fuel cell, for example, is used as the home power generating device 104, and generated power is supplied to the power-consuming appliances 105 and/or the energy storage device 103. A refrigerator 105a, an air-conditioner 105b, a TV receiver 105c and a bath 105d are examples of the power-consuming appliances 105. The power-consuming appliances 105 also include electric-powered vehicles 106. The electric-powered vehicles 106 are an electric car 106a, a hybrid car 106b and an electric motorcycle 106c.

The energy storage device 103 has a battery. The battery may include, for example, lithium-ion secondary cells. One of DC, AC and non-contact power feeding may be used for the electricity network 109. Alternatively, two or more thereof may be used in combination for the same network 109.

Among the various types of sensors 111 are a motion sensor, an illuminance sensor, an object detection sensor, a power consumption sensor, a vibration sensor, a contact sensor, a temperature sensor and an infrared sensor. Information obtained by the various types of sensors 111 is transmitted to the controller 110. Information from the sensors 111 makes it possible to grasp the weather and human conditions, automatically controlling the power-consuming appliances 105 and reducing the power consumption to a minimum. Further, the controller 110 can transmit information about the house 101 to an external utility company via the Internet.

The power hub 108 handles tasks such as branching the power line and converting DC to AC power. Among the methods of communication between the controller 110 and the information network 112 connected thereto are communication interfaces such as UART (Universal Asynchronous Receiver-Transceiver) and sensor networks based on wireless communication standards such as Bluetooth (registered trademark of Bluetooth SIG), ZigBee and Wi-Fi. The Bluetooth scheme is applied to multimedia communications for one-to-multiple connections. ZigBee is used for the physical layer of IEEE (Institute of Electrical Engineers) 802.15.4. IEEE 802.15.4 is the name of a short-range wireless network standard called PAN (Personal Area Network) or W (Wireless) PAN.

The controller 110 is connected to an external server 113. The server 113 may be managed by one of the house 101, a utility company and a service provider. Information exchanged by the server 113 is, for example, power consumption information, life pattern information, electricity rates, weather information, natural disaster information and information relating to electricity trade. These pieces of information may be exchanged to and from a power consuming appliance (e.g., a TV receiver) inside the home. Alternatively, they may be exchanged to and from a device (e.g., a mobile phone) outside the home. These pieces of information may be displayed, for example, on a piece of equipment having display functionality such as a TV receiver, a mobile phone or a PDA (Personal Digital Assistant).

The controller 110 adapted to control each section includes, for example, a CPU, a RAM and a ROM and is housed in the energy storage device 103. The controller 110 is connected to the energy storage device 103, the home power generating device 104, the power-consuming appliances 105, the various types of sensors 111 and the server 113 by the information network 112 and has the functionality to adjust the commercial power consumption and the amount of generated power. In addition to the above, the controller 110 may have the functionality to trade electricity in the electricity market.

As described above, it is possible to store not only power generated by the centralized power grid 102 such as the thermal power generation 102a, the nuclear power generation 102b and the hydraulic power generation 102c but also power generated by the home power generating device 104 (solar or wind power generator) in the energy storage device 103. This makes it possible to maintain the amount of power supplied to external equipment constant or discharge only the necessary amount of power even in the event of variation in power generated by the home power generating device 104. For example, it is possible to store not only power obtained from solar power generation but also cheap night time power in the energy storage device 103, thus discharging power from the energy storage device 103 during day time when the electricity rates are high.

It should be noted that the energy storage system 100 may be used for a plurality of households in an apartment building or a plurality of detached houses.

(3-2) Energy storage system in a Vehicle as an Application Example

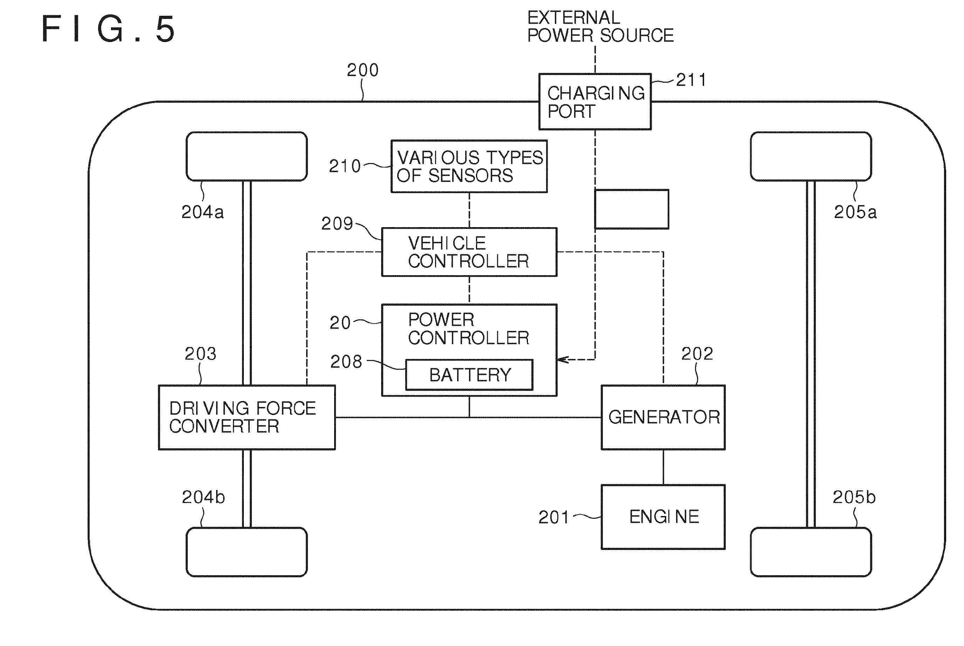

A description will be given of an example of application of the present technology to an energy storage system for vehicle with reference to FIG. 5. FIG. 5 exemplarily illustrates a configuration of a hybrid vehicle adopting a series hybrid system to which the present technology is applied. A series hybrid system is applied to a car that runs by means of an electric power-driving force converter using electric power generated by a generator that is driven by an engine or power stored in the battery from the generator.

A hybrid vehicle 200 has an engine 201, a generator 202, an electric power-driving force converter 203, driving wheels 204a and 204b, wheels 205a and 205b, the power controller 20, a vehicle controller 209, various types of sensors 210 and a charging port 211. The power controller 20 has a battery 208. The battery 208 corresponds to the power controller 20 shown in FIG. 1.

The hybrid vehicle 200 runs on the electric power-driving force converter 203 as its source of power. An example of the electric power-driving force converter 203 is a motor. The electric power-driving force converter 203 is activated by power from the battery 208, transferring the rotational force of the same converter 203 to the driving wheels 204a and 204b. It should be noted that both AC and DC motors may be used as the electric power-driving force converter 203 if DC-AC or AC-DC conversion is used where necessary. The various types of sensors 210 control, for example, the engine rotation speed via the vehicle controller 209 and the opening angle of the throttle valve that is not shown. The various types of sensors 210 include, for example, speed, acceleration and engine rotation speed sensors.

The rotation force of the engine 201 is transferred to the generator 202, making it possible to store power, generated by the generator 202 using the rotational force, in the battery 208.

When the hybrid vehicle 200 decelerates using an unshown braking mechanism, a resistive force during deceleration is exerted on the electric power-driving force converter 203 as a rotational force, storing the regenerative power generated by the electric power-driving force converter 203 using the rotational force in the battery 208.

The battery 208 can be supplied with power from an external power source outside the hybrid vehicle 200 through the charging port 211 as an inlet when connected to the external power source, and can store the supplied power.

Although not illustrated, an information processor may be provided to process information relating to vehicle control based on cell information. An example of such an information processor is that adapted to display the cell remaining charge based on information about the cell remaining charge.

It should be noted that the description has been given by taking, as an example, a series hybrid vehicle that runs on a motor using power generated by a generator that is driven by an engine or power stored once in a battery. However, the present technology is effectively applicable to a parallel hybrid vehicle that uses both an engine and motor as its driving source and suitably switches between cruising on the engine alone, cruising on the motor alone and cruising on both the engine and motor. Further, the present technology is applicable to a so-called electric-powered vehicle that has no engine and runs on a drive motor alone.

It should be noted that the present technology may have the following configurations.

(1) A charging device including:

a power supply section adapted to supply power from a power source to external equipment;
a control section adapted to activate the power supply section; and
an activation section adapted to activate the power supply section if the control section is not activated.

(2) The charging device of feature (1), in which the power supply section is activated by receiving an enable signal from either the control section or the activation section.

(3) The charging device of feature (1) or (2) further including:

an OR circuit adapted to output an enable signal, received from the control section or the activation section, to the power supply section.

(4) The charging device of any of features (1) to (3), in which the activation section activates the power supply section in response to a user input.

(5) The charging device of any of features (1) to (4), in which the activation section activates the power supply section by supplying an enable signal for a given period of time in response to supply of power from the power source.

(6) The charging device of any one of features (1) to (5) further including:

a voltage conversion section adapted to convert the voltage of power from the power source to a given voltage and supply the power to the power supply section.

(7) A control method of a charging device, including:

activating a power supply section adapted to supply power from a power source to external equipment if a control section adapted to activate the power supply section is not activated.

(8) An electric-powered vehicle including:

a charging device including
a power supply section adapted to supply power from a power source to external equipment,
a control section adapted to activate the power supply section, and
an activation section adapted to activate the power supply section if the control section is not activated;
a converter being supplied with power from the power supply section and converting power into a driving force of the vehicle; and
a controller handling information processing relating to vehicle control based on information about the power supply section.

(9) An energy storage device including:

a charging device including
a power supply section adapted to supply power from a power source to external equipment,
a control section adapted to activate the power supply section, and
an activation section adapted to activate the power supply section if the control section is not activated;
the energy storage device supplying power to electronic equipment connected to the power supply section.

(10) A power system including:

a battery; and
a charging device including

a power supply section adapted to supply power from a power source to external equipment,
a control section adapted to activate the power supply section, and
an activation section adapted to activate the power supply section if the control section is not activated; wherein

the battery supplies power, and is supplied with power from a generator or an electricity network. The present technology contains subject matter related to that disclosed in Japanese Priority Patent Application JP 2012-093677 filed in the Japan Patent Office on April 17, 2012.

In so far as embodiments of the invention described above are implemented, at least in part, using software-controlled data processing apparatus, it will be appreciated that a computer program providing such software control and a transmission, storage or other medium by which such a computer program is provided are envisaged as aspects of the present invention.

**Claims**

1.   A charging device comprising:

a power supply section adapted to supply power from a power source to external equipment;
a control section adapted to activate the power supply section; and
an activation section adapted to activate the power supply section if the control section is not activated.

2.   The charging device of claim 1, wherein the power supply section is activated by receiving an enable signal from either the control section or the activation section.

3.   The charging device of claim 2 further comprising:

an OR circuit adapted to output an enable signal, received from the control section or the activation section, to the power supply section.

4.   The charging device of claim 1, wherein the activation section activates the power supply section in response to a user input.

5.   The charging device of claim 2, wherein the activation section activates the power supply section by supplying an enable signal for a given period of time in response to supply of power from the power source.

6.   The charging device of claim 1 further comprising:

a voltage conversion section adapted to convert the voltage of power from the power source to a given voltage and supply the power to the power supply section.

7.   A control method of a charging device, comprising:

activating a power supply section adapted to supply power from a power source to external equipment if a control section adapted to activate the power supply section is not activated.

8.   An electric-powered vehicle comprising:

a charging device including
a power supply section adapted to supply power from a power source to external equipment,
a control section adapted to activate the power supply section, and
an activation section adapted to activate the power supply section if the control section is not activated;
a converter being supplied with power from the power supply section and converting power into a driving force of the vehicle; and
a controller handling information processing relating to vehicle control based on information about the power supply section.

9.   An energy storage device comprising:

a charging device including

a power supply section adapted to supply power from a power source to external equipment, a control section adapted to activate the power supply section, and an activation section adapted to activate the power supply section if the control section is not activated; the energy storage device supplying power to electronic equipment connected to the power supply section.

10. A power system comprising:

a battery; and a charging device including a power supply section adapted to supply power from a power source to external equipment, a control section adapted to activate the power supply section, and an activation section adapted to activate the power supply section if the control section is not activated; wherein the battery supplies power, and is supplied with power from a generator or an electricity network.

F I G . 1

EP 2 653 338 A2

# FIG. 2

20

BATTERY — 5

THIRD INSULATING DD — 13

CONTROL MICROCOMPUTER — 6

CHARGER — 2

LOGIC CIRCUIT — 15

ACTIVATION SECTION — 3

FIRST INSULATING DD (POWER SUPPLY) — 11

OVERCURRENT PROTECTION CIRCUIT — 14

SECOND INSULATING DD — 12

POWER FROM POWER SOURCE

# FIG.3

```
                    ┌─────────────┐
                    │    START    │
                    └─────────────┘
                           │
                           ▼
              S11 ◁─────────────────────▷ NO ──┐
              ANY INPUT                          │
              TO ACTIVATION SECTION              │
                    ?                            │
                           │                     │
                          YES                    │
                           ▼                     │
        ┌──────────────────────────────┐        │
        │ ENABLE SIGNAL OUTPUT FROM     │ S12    │
        │ ACTIVATION SECTION            │        │
        └──────────────────────────────┘        │
                           │                     │
                           ▼                     │
              S13 ◁─────────────────────▷ NO ────┤
              ENABLE SIGNAL                       │
              OUTPUT BASED ON LOGIC               │
                 OPERATION ?                      │
                           │                      │
                          YES                     │
                           ▼                      │
        ┌──────────────────────────────┐         │
        │ FIRST INSULATING DD, CHARGER  │ S14     │
        │ AND THIRD INSULATING DD       │         │
        │ ACTIVATED                     │         │
        └──────────────────────────────┘         │
                           │                      │
                           ▼                      │
        ┌──────────────────────────────┐         │
        │ POWER SUPPLIED TO CONTROL     │ S15     │
        │ MICROCOMPUTER AND OTHER       │         │
        │ SECTIONS                      │         │
        └──────────────────────────────┘         │
                           │                      │
                           ▼                      │
        ┌──────────────────────────────┐         │
        │ CONTROL MICROCOMPUTER         │ S16     │
        │ ACTIVATED                     │         │
        └──────────────────────────────┘         │
                           │                      │
                           ▼                      │
        ┌──────────────────────────────┐         │
        │ CONTROL MICROCOMPUTER         │ S17     │
        │ CONTROLS CHARGER              │         │
        └──────────────────────────────┘         │
                           │                      │
         ┌─────────────────┤                      │
         │                 ▼                      │
         │    S18 ◁─────────────────────▷         │
     NO ─┘    HAS BATTERY                         │
              CHARGE REACHED GIVEN                │
                 LEVEL ?                          │
                           │                      │
                          YES                     │
                           ▼                      │
        ┌──────────────────────────────┐         │
        │ POWER SUPPLY SETUP PROCESS    │ S19     │
        └──────────────────────────────┘         │
                           │◀─────────────────────┘
                           ▼
                    ┌─────────────┐
                    │     END     │
                    └─────────────┘
```

# FIG. 4

- 101
- 104
- 102 CENTRALIZED POWER GRID
  - THERMAL POWER GENERATION — 102a
  - NUCLEAR POWER GENERATION — 102b
  - HYDRAULIC POWER GENERATION — 102c
- VARIOUS TYPES OF SENSORS — 111
- 108
- 10
- 109
- POWER HUB
- SMART METER
- 112
- 105 POWER-CONSUMING APPLIANCES
  - BATH
  - RE-FRIGERATOR
  - TV
  - AIR-CONDITIONER
  - 105c 105d 105b 105a
- ENERGY STORAGE DEVICE — 103
  - CONTROLLER — 110
  - POWER CONTROLLER — 20
- 106 ELECTRIC-POWERED VEHICLES
  - ELECTRIC CAR — 106a
  - HYBRID CAR — 106b
  - ELECTRIC MOTORCYCLE — 106c
- SERVER — 113
- 100

EP 2 653 338 A2

# F I G . 5

EP 2 653 338 A2

**EP 2 653 338 A2**

## REFERENCES CITED IN THE DESCRIPTION

**Patent documents cited in the description**

- JP 2006246559 A
- JP 2012093677 A